# EUROPÄISCHE PATENTSCHRIFT

(11) **EP 3 356 669 B1**
(45) Veröffentlichungstag und Bekanntmachung des Hinweises auf die Patenterteilung: **31.05.2023**
(21) Anmeldenummer: 16775147.8
(22) Anmeldetag: 26.09.2016
(51) Int. Cl.: F03D 1/06

(54) **WINDENERGIEANLAGEN-ROTORBLATT UND WINDENERGIEANLAGE**
WIND TURBINE ROTOR BLADE AND WIND TURBINE SYSTEM
PALE DE ROTOR D'ÉOLIENNE ET ÉOLIENNE

(30) Priorität: 01.10.2015 DE 102015116634
(43) Veröffentlichungstag der Anmeldung: 08.08.2018
(73) Patentinhaber: Wobben Properties GmbH, 26607 Aurich (DE)
(72) Erfinder: SPIETH, Falk, 26603 Aurich (DE); HOFFMANN, Alexander, 26721 Emden (DE); BÖRCHERS, Rasmus, 28211 Bremen (DE)
(74) Vertreter: Eisenführ Speiser
(86) Internationale Anmeldenummer: PCT/EP2016/072793
(87) Internationale Veröffentlichungsnummer: WO 2017/055194

(56) Entgegenhaltungen:
- WO-A1-2016/008874
- WO-A2-2012/019611
- DE-U1-202011 103 091
- US-A1- 2013 209 264
- US-A1- 2015 132 138

## Beschreibung

Die Erfindung betrifft ein Windenergieanlagen-Rotorblatt mit wenigstens einem Hinterkantensegmentabschnitt und einem Innenblattabschnitt einer Windenergieanlage, eine Windenergieanlage sowie ein Verfahren zum Verbinden eines Hinterkantensegmentabschnitts mit einem Innenblattabschnitt eines Rotorblatts.

Für die Effizienz einer Windenergieanlage ist das Design eines bzw. der Rotorblätter wesentlich. Eine Möglichkeit die Effizienz und Leistungsfähigkeit der Windenergieanlage über das Design des Rotorblatts zu steigern ist das Profil des Rotorblatts im Bereich der Rotorblattwurzel mit einer großen Profiltiefe auszugestalten, also die Länge des Rotorblatts zwischen Rotorblatthinterkante und Rotorblattnase möglichst groß auszuführen. Unter dem Bereich der Rotorblattwurzel ist dabei der Bereich des Rotorblatts zu verstehen, an dem das Rotorblatt an der Nabe befestigt wird. Die maximale Profiltiefe liegt bei einem solchen Rotorblatt sehr nahe am Endbereich des Rotorblatts an der Rotorblattwurzel. Dadurch werden Wirbelerzeugungen reduziert und somit die Effizienz der gesamten Windenergieanlage gesteigert.

Eine solche Vergrößerung der Profiltiefe des Rotorblatts an der Rotorblattwurzel kann insbesondere bei größeren Windenergieanlagen mit Rotordurchmessern größer als 60 Meter zu Problemen beim Transport führen, da die maximale Profiltiefe bei solchen Rotorblättern fünf Meter oder mehr aufweist. Bei einem Transport solcher Rotorblätter über Land ist ein hoher logistischer Aufwand erforderlich, um das Rotorblatt durch schmale Kurven oder unter Brücken hindurch zu transportieren. Es müssen Umwege in Kauf genommen werden oder die entsprechenden Straßenstellen angepasst werden und beispielsweise Straßenschilder o.ä. entfernt werden. Alternativ dazu kann teure Fahrzeugtechnik mit Hebebühnen zum Einsatz kommen.

Zur Lösung dieses Problems ist es bereits bekannt, das Rotorblatt im Bereich der Rotorblattwurzel mit einem separaten Hinterkantensegment zu versehen, um an dieser Stelle eine maximale Profiltiefe zu erreichen. Dadurch ist es möglich das Hinterkantensegment oder einen Teil bzw. Abschnitt davon erst an dem Aufstellungsort der Windenergieanlage zu montieren. Bei solchen Lösungen wurde das Hinterkantensegment bzw. ein Hinterkantensegmentabschnitt bislang über seine gesamte Länge in Blattlängsrichtung an den Innenblattabschnitt befestigt. Dadurch werden die an dem Innenblatt des Rotorblatts auftretenden Belastungen auf das Hinterkantensegment übertragen. Das Innenblatt eines Rotorblatts ist die lasttragende Struktur, an der zu einem späteren Zeitpunkt während der Herstellung des Rotorblatts eine aerodynamische Verkleidung befestigt wird, die das aerodynamische Profil des Rotorblatts bildet. Die an dem Innenblatt auftretenden Lasten sind dabei insbesondere im Anschlussbereich an die Nabe durch die dortige Konzentration der Rotorkräfte bei extrem hoher Wechselbeanspruchung besonders groß. Dadurch ist auch der Verbindungsbereich zwischen dem Rotorblatt bzw. dem Innenblatt und dem Hinterkantensegment bzw. dem Hinterkantensegmentabschnitt sehr hohen Belastungen ausgesetzt. Dadurch kann es zu Beschädigungen in dem Verbindungsbereich bzw. an dem Hinterkantensegment und/oder Rotorblatt kommen. Die Ausgestaltung des Verbindungsbereichs ist daher bislang kompliziert und aufwendig. Zudem ist die Menge an benötigten Verbindungsmaterialien wie Klebstoff oder sonstigen Verbindungselementen sehr hoch, wodurch hohe Kosten anfallen.

In der prioritätsbegründenden deutschen Patentanmeldung wurden vom Deutschen Patent- und Markenamt als Stand der Technik die folgenden Dokumente genannt: DE 20 2011 103 091 U1, DE 10 2013 101 232 A1, DE 10 2011 088 025 A1, DE 10 2006 022 279 A1 und WO 2011/088835 A2.

Der Erfindung liegt daher die Aufgabe zugrunde, wenigstens eines der genannten Probleme zu adressieren. Insbesondere soll eine Lösung geschaffen werden, durch die die Belastung auf das Hinterkantensegment bei gleichzeitiger Kostenreduktion und einfacher Ausgestaltung reduziert wird. Zumindest soll eine alternative Lösung vorgeschlagen werden.

Zur Lösung der Aufgabe wird ein Windenergieanlagen-Rotorblatt gemäß Anspruch 1 vorgeschlagen.

Das Windenergieanlagen-Rotorblatt weist dabei eine Blattwurzel zum Anschluss des Rotorblatts an eine Rotornabe, einen Innenblattabschnitt, der sich ausgehend von der Blattwurzel in Richtung der Längsachse des Rotorblatts erstreckt, wenigstens einen Hinterkantensegmentabschnitt eines Hinterkantensegments zur Vergrößerung der Profiltiefe des Rotorblatts an der Blattwurzel und wenigstens einen ersten und einen zweiten Befestigungsabschnitt zum Befestigen des wenigstens einen Hinterkantensegmentabschnitts des Hinterkantensegments an dem Innenblattabschnitt auf. Dabei ist der erste Befestigungsabschnitt von dem zweiten Befestigungsabschnitt in Richtung der Längsachse des Rotorblatts in einem vorbestimmten Abstand angeordnet und der wenigstens eine Hinterkantensegmentabschnitt des Hinterkantensegments ist derart an dem Innenblattabschnitt befestigt, dass über den ersten und den zweiten Befestigungsabschnitt an dem Innenblattabschnitt auftretende Lasten punktuell auf den wenigstens einen Hinterkantensegmentabschnitt des Hinterkantensegments übertragen werden. Da die Hinterkantensegmentabschnitte nur punktuell an dem Innenblattabschnitt befestigt sind, kommt es zu einer Lastentkopplung zwischen Innenblattabschnitt und Hinterkantensegment. Der mindestens eine Hinterkantensegmentabschnitt weist im ersten und zweiten Befestigungsabschnitt eine erste und eine zweite Versteifungsrippe zur Versteifung des wenigstens einen Hinterkantensegmentabschnitt auf, und die erste und die zweite Versteifungsrippe ist zur Anbindung an den Innenblattabschnitt vorbereitet und an dem Innenblattabschnitt im ersten und zweiten Befestigungsabschnitt ist eine erste und eine zweite Verbindungsrippe angeordnet und die erste und die zweite Verbindungsrippe ist zur Anbindung an den wenigstens einen Hinterkantensegmentabschnitt vorbereitet.

An dem Innenblattabschnitt kann der Hinterkasten und ein Außenblatt befestigt werden.

Der Innenblattabschnitt ist dabei der Bereich des Innenblatts, der sich an die Blattwurzel anschließt. Das Innenblatt kann dabei optional bis zu der Blattspitze des Rotorblatts reichen. Der Innenblattabschnitt ist dann zumindest der Abschnitt des Innenblatts, an dem der wenigstens eine Hinterkantensegmentabschnitt des Hinterkantensegments angeordnet ist, also der Abschnitt des Innenblatts, der im Wesentlichen der Länge des Hinterkantensegments entspricht.

Unter dem wenigstens einen Hinterkantensegmentabschnitt ist wenigstens ein Teil des Hinterkantensegments zu verstehen. Das Hinterkantensegment kann aus einem einzigen oder mehreren Hinterkantensegmentabschnitten ausgeführt sein. Mehrere Hinterkantensegmentabschnitte haben dabei den Vorteil, dass beispielsweise ein Hinterkantensegmentabschnitt an dem Innenblattabschnitt des Rotorblatts bereits in der Fertigungshalle befestigt wird. Dadurch können Toleranzen besser eingehalten werden. Zur Vergrößerung der Profiltiefe können dann an dem bereits montierten Hinterkantensegmentabschnitt weitere Hinterkantensegmentabschnitte am Aufstellungsort der Windenergieanlage montiert werden, um so den logistischen Aufwand beim Transport des Rotorblatts zum Aufstellungsort zu reduzieren.

Zum Befestigen des wenigsten einen Hinterkantensegmentabschnitts mit dem Innenblattabschnitt sind wenigstens ein erster und ein zweiter in einem vorbestimmten Abstand zueinander angeordneter Befestigungsabschnitt vorgesehen. Der erste Befestigungsabschnitt ist dabei z. B. in (unmittelbarer) Nähe zu der Blattwurzel angeordnet und der zweite Befestigungsabschnitt in unmittelbarer Nähe zu dem der Blattwurzel gegenüberliegenden Ende des Hinterkantensegmentabschnitts, oder umgekehrt. Durch einen solchen Abstand der beiden Befestigungsabschnitte wird eine konzentrierte Krafteinleitung von den am Innenblattabschnitt auftretenden Lasten in den Hinterkantensegmentabschnitt bei gleichzeitig ausreichender Befestigung und Einsparung von Verbindungsmaterialien sichergestellt. Dadurch werden nicht mehr die gesamten an dem Rotorblatt auftretenden Lasten auf den Hinterkantensegmentabschnitt übertragen, sondern nur noch ein Teil davon. Belastungen im Verbindungsbereich bzw. an dem Hinterkantensegment werden dadurch erheblich reduziert. Zudem werden Kosten für Materialien in dem Verbindungsbereich reduziert. Das Hinterkantensegment wird gemäß der Erfindung von der Durchbiegung des Rotorblattes (d. h. des Innenblattes) entkoppelt. Deshalb können weniger Belastungen im Hinterkantensegment auftreten. Die Hinterkantensegmentabschnitte sind gemäß der Erfindung nicht mehr ganzflächig an dem Innenblatt verklebt, sondern nur noch punktuell (z. B. zwei Mal) mit dem Innenblatt verbunden. Dies führt zu einer erheblich verbesserten Lastentkopplung zwischen Innenblatt und Hinterkantensegment.

Alternativ ist es möglich eine Lasteinleitung über mehrere Befestigungsabschnitte zu realisieren. Insbesondere ist dafür ein dritter, vierter, fünfter und/oder sechster Befestigungsabschnitt vorgesehen, wobei jeder Befestigungsabschnitt einen vorbestimmten Abstand in Richtung der Längsachse des Rotorblatts zu dem jeweils nächsten Befestigungsabschnitt aufweist. Gemäß einem Aspekt der Erfindung weist das Hinterkantensegment z.B. zwei Schotte auf.

In einer bevorzugten Ausführungsform weisen die Hinterkantensegmentsabschnitte jeweils eine Oberseite (Druckseite) und eine Unterseite (Saugseite) auf, die einen Aufnahmeraum bilden und in dem Aufnahmeraum der erste und der zweite Befestigungsabschnitt angeordnet ist. Dadurch sind der erste und der zweite Befestigungsabschnitt von der Oberseite und der Unterseite des Hinterkantensegmentsabschnitts umgeben und somit vor Umwelteinflüssen geschützt. Dadurch werden Schäden an den Befestigungsabschnitten durch Witterungseinflüsse o.ä. vermieden. Zudem wird die Aerodynamik des Rotorblattes nicht beeinträchtigt.

Vorzugsweise weist der wenigstens eine Hinterkantensegmentabschnitt im ersten und zweiten Befestigungsabschnitt eine erste und eine zweite Versteifungsrippe zur Versteifung des wenigstens einen Hinterkantensegmentabschnitts auf, und die erste und die zweite Versteifungsrippe ist zur Anbindung an den Innenblattabschnitt vorbereitet. Alternativ oder zusätzlich dazu ist an dem Innenblattabschnitt im ersten und zweiten Befestigungsabschnitt eine erste und eine zweite Verbindungsrippe angeordnet, und die erste und die zweite Verbindungsrippe ist zur Anbindung an den wenigstens einen Hinterkantensegmentabschnitt vorbereitet. Die erste und die zweite Versteifungsrippe ist demnach insbesondere zwischen der Oberseite und der Unterseite, also im Aufnahmeraum des Hinterkantensegmentabschnitts angeordnet und über eine Klebeverbindung mit der Ober- und Unterseite verbunden. Die Anbindung an den Innenblattabschnitt kann über eine Verbindung der ersten und zweiten Versteifungsrippe mit der ersten bzw. zweiten Verbindungsrippe erfolgen und/oder durch eine Anpassung der Geometrie der Verbindungsstelle zwischen der jeweiligen Verbindungsrippe und dem Innenblattabschnitt. Bei einem runden Innenabschnitt weist die Verbindungsrippe demnach an der Verbindungsstelle zumindest teilweise eine Aussparung auf, die einen Viertelkreis oder Viertelkreissegment zur Aufnahme des näherungsweisen runden oder elliptischen Innenblattabschnitts aufweist.

In einer bevorzugten Ausführungsform weist die erste und die zweite Versteifungsrippe jeweils eine (Längs)Kante auf, die sich z. B. über die gesamte Profiltiefe des Hinterkantensegmentabschnitts erstreckt und/oder innerhalb des Aufnahmeraums an der Oberseite und/oder der Unterseite des Hinterkantensegmentabschnitts befestigt ist. Durch die Länge der jeweiligen Versteifungsrippe entlang der Profiltiefe wird zum Einen eine Versteifung des Hinterkantensegmentabschnitts und zum Anderen eine gleichmäßige Lastübertragung sichergestellt. Die Befestigung dieser Kante im Innern des Hinterkantensegmentabschnitts schützt die Anbindung vor äußeren Einflüssen.

In einer besonders bevorzugten Ausführungsform weist die erste und die zweite Versteifungsrippe eine Querkante auf, die an die Geometrie des Innenblattabschnitts angepasst ist. Die Querkante verläuft dabei von der Oberseite zur Unterseite des Hinterkantensegmentabschnitts. Durch die Anpassung der Querkante an die Geometrie des Innenblattabschnitts wird eine passgenaue Anbindung des Hinterkantensegmentabschnitts mit dem Innenblattabschnitt gewährleistet. Die Querkante kann somit die Verbindung des Innenblattabschnitts und des Hinterkantensegmentabschnitts weiter festigen. Eine feste Verbindung von der Querkante bzw. einem Verklebefuß zu dem Innenblattabschnitt ist dadurch ebenfalls möglich.

Vorzugsweise sind die erste Versteifungsrippe und die erste Verbindungsrippe sowie die zweite Versteifungsrippe und die zweite Verbindungsrippe über eine stoffschlüssige und/oder formschlüssige Verbindung befestigt. Dabei werden die Versteifungsrippen und die Verbindungsrippen jeweils an einer gemeinsamen Kontaktfläche miteinander verbunden. Die jeweilige Verbindungstechnik wird dabei in Abhängigkeit von den auftretenden Lasten und dem geometrischen Aufbau des Hinterkantensegmentabschnitts und Innenblattabschnitts angepasst. Eine besonders feste Verbindung wird durch eine Kombination einer formschlüssigen und stoffschlüssigen Verbindung erzielt.

In einer bevorzugten Ausführungsform umfasst die stoffschlüssige Verbindung eine Klebeverbindung, insbesondere eine Klebeverbindung umfassend einen Zweikomponenten-Klebstoff. Eine solche Klebeverbindung weist dabei den Vorteil auf, dass eine Krafteinleitung auch bei verschiedenen Materialien eingeleitet werden kann, wie beispielsweise eine Krafteinleitung von einem glasfaserverstärkten Kunststoff auf ein Aluminiumbauteil. Die Querschnitte der Verbindungsrippen und der Versteifungsrippen werden nicht reduziert und die Spannungsverteilung erfolgt gleichmäßig. Zudem können durch eine Klebeverbindung Passungenauigkeiten ausgeglichen werden, die bei der Fertigung entstehen können.

In einer besonders bevorzugten Ausführungsform umfasst die formschlüssige Verbindung eine Nietverbindung, Schraubverbindung, Bolzenverbindung und/oder Schlaufenverbindung. Bei einer hohen Belastung an den Verbindungsstellen sind solche Verbindungstechniken dabei vorteilhaft. Eine Niet-, Schraub-, und Bolzenverbindung hat dabei den Vorteil, dass sie hohe Lasten übertragen werden können und die benötigten Verbindungselemente mit hoher Qualität gefertigt werden können. Dadurch wird eine hohe Sicherheit im Bereich der Verbindung erzielt. Zudem ist eine solche Verbindungtechnik kostengünstig. Bei einer hohen punktuellen Lasteinleitung ist dabei insbesondere eine Schlaufenverbindung durch Aufteilung der Last in zwei Stränge vorteilhaft.

Vorzugsweise sind die erste Versteifungsrippe und die erste Verbindungsrippe sowie die zweite Versteifungsrippe und die zweite Verbindungsrippe planparallel zueinander angeordnet. Durch die planparallele Anordnung wird eine ausreichend große Fläche bereitgestellt, über die die jeweiligen Versteifungsrippen und Verbindungsrippen eine Verbindung herstellen. Zudem wird dadurch eine möglichst genaue Auflage der Kontaktflächen der jeweiligen Versteifungsrippe und Verbindungsrippe sichergestellt.

In einer bevorzugten Ausführungsform ist die erste und die zweite Verbindungsrippe U- und/oder I-förmig ausgeführt. Die U-Form eignet sich dabei insbesondere für eine formschlüssige Verbindung, da durch die Aussparung in der Mitte Material eingespart werden kann. Die Doppel-T-Form ist dabei insbesondere für eine stoffschlüssige Verbindung geeignet, da durch die Doppel-T-Form eine ausreichend große Fläche zum Aufbringen des Klebemittels bereitgestellt wird.

In einer besonders bevorzugten Ausführungsform sind in der ersten und zweiten Verbindungsrippe Bohrlöcher zum Verbinden der Verbindungsrippe mit einer Versteifungsrippe vorgesehen. Insbesondere sind dabei zwei Bohrlöcher vorgesehen um eine gleichmäßige Krafteinleitung zu erzielen.

Vorzugsweise ist der Innenblattabschnitt aus einem Faserverbundwerkstoff hergestellt, insbesondere aus einem glasfaserverstärktem Kunststoff. Somit kann der Innenblattabschnitt gezielt für die auftretenden Lasten kostengünstig hergestellt werden.

In einer bevorzugten Ausführungsform weist der Innenblattabschnitt einen ringförmigen Querschnitt oder einem elliptischen Querschnitt (konkave Flansche) auf und/oder ist als Wickelkörper ausgeführt. Dabei wird ein solcher Innenblattabschnitt insbesondere aus einem glasfaserverstärktem Kunststoff hergestellt. Es wird insbesondere ein mit einem Harz-Härter-Gemisch getränktes glasfaserverstärktes Gelege auf einen Wickelkern insbesondere automatisiert abgelegt bzw. abgewickelt, so dass ein sogenannter Wickelkörper gebildet wird. Bei einem kreisförmigen Wickelkern erhält der Wickelkörper entsprechend einen ringförmigen Querschnitt. Dadurch wird eine gleichbleibende hohe Qualität bei einem gleichzeitig kostengünstigem Herstellungsverfahren des Innenblattabschnitts sichergestellt.

In einer besonders bevorzugten Ausführungsform sind die erste und die zweite Verbindungsrippe in den Innenblattabschnitt eingewickelt. Dadurch wird eine zusätzliche Montage der jeweiligen Verbindungsrippen an den Innenblattabschnitt vermieden, wodurch Kosten und ggf. das Gesamtgewicht des Rotorblatts reduziert werden. Zudem wird eine sichere Anbindung der jeweiligen Verbindungsrippen an den Innenblattabschnitt gewährleistet.

Weiterhin wird zur Lösung der Aufgabe eine Windenergieanlage gemäß Anspruch 13 vorgeschlagen. Die Windenergieanlage umfasst dabei einen Turm, eine drehbar an dem Turm gelagerten Gondel, einen drehbar an der Gondel gelagerten Rotor, und wenigstens ein Rotorblatt nach einer zuvor beschriebenen Ausführungsform. Dadurch ergeben sich die zuvor genannten Vorteile in gleichem Maße.

Zudem wird zur Lösung der Aufgabe ein Verfahren zum Verbinden wenigstens eines Hinterkantensegmentabschnitts mit einem Innenblattabschnitt eines Rotorblatts einer Windenergieanlage nach einem der zuvor beschriebenen Ausführungsformen vorgeschlagen. Mindestens ein Hinterkantensegmentabschnitt wird bereitgestellt und ein Innenblattabschnitt wird bereitgestellt. Der mindestens eine Hinterkantensegmentabschnitt wird mit dem Innenblattabschnitt an wenigstens einem ersten und einem zweiten Befestigungsabschnitts in einem in Richtung der Längsachse vorbestimmten Abstand zueinander verbunden. Damit werden über den ersten und den zweiten Befestigungsabschnitt an dem Innenblattabschnitt auftretende Lasten punktuell auf den wenigstens einen Hinterkantensegmentabschnitt übertragen.

Dabei ergeben sich die zuvor genannten Vorteile in gleichem Maße.

Vorzugsweise wird der wenigstens eine Hinterkantensegmentabschnitt mit dem Innenblattabschnitt formschlüssig und/oder stoffschlüssig verbunden, insbesondere mittels einer Nietverbindung, Schraubverbindung, Bolzenverbindung, Schlaufenverbindung bzw. einer Klebeverbindung. Die jeweilige Verbindungstechnik wird dabei in Abhängigkeit von den auftretenden Lasten und dem geometrischen Aufbau des Hinterkantensegmentabschnitts und Innenblattabschnitts angepasst. Eine besonders feste Verbindung wird durch eine Kombination einer formschlüssigen und stoffschlüssigen Verbindung erzielt.

Nachfolgend wird die Erfindung anhand von Ausführungsbeispielen unter Bezugnahme auf die begleitenden Figuren beispielhaft erläutert. Die Figuren enthalten dabei teilweise vereinfachte, schematische Darstellungen.
- Fig. 1: zeigt eine Windenergieanlage gemäß der vorliegenden Erfindung,
- Fig. 2: zeigt einen Ausschnitt eines Rotorblatts mit einem Hinterkantensegment gemäß der Erfindung,
- Fig. 3: zeigt einen Ausschnitt eines Rotorblatts mit einem Hinterkantensegment gemäß einem ersten Ausführungsbeispiel der Erfindung,
- Fig. 4: zeigt eine Vorderansicht eines Ausschnitts eines Rotorblatts mit einem Hinterkantensegment gemäß einem zweiten Ausführungsbeispiel der Erfindung,
- Fig. 5: zeigt einen Ausschnitt eines erfindungsgemäßen Hinterkantensegments,
- Fig. 6: zeigt eine schematische Darstellung eines Ausschnitts eines Rotorblatts gemäß der Erfindung, und
- Fig. 7: zeigt eine schematische Darstellung eines Hinterkantensegmentabschnittes gemäß der Erfindung.

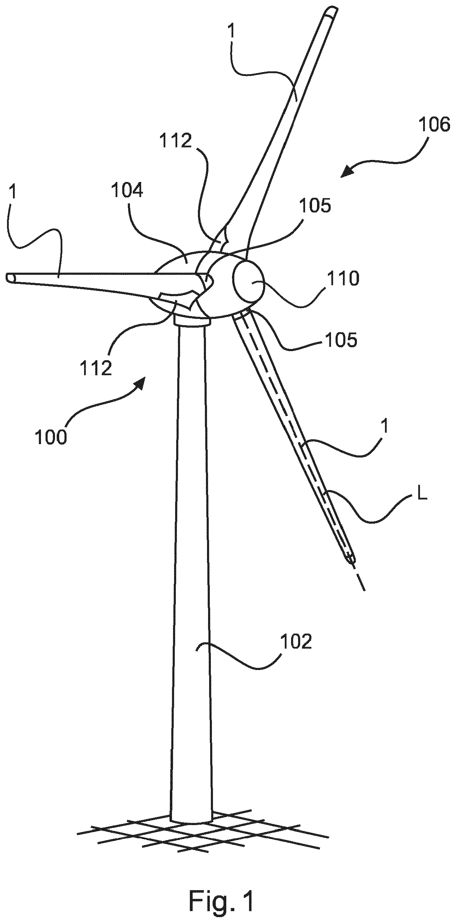

Fig. 1 zeigt eine Windenergieanlage 100 mit einem Turm 102 und einer Gondel 104. An der Gondel 104 ist ein Rotor 106 mit einem Spinner 110 und drei Rotorblättern 1 mit je einem Hinterkantensegment 112 angeordnet. Die Rotorblätter 1 sind jeweils an einer Nabe 105 befestigt. Der Rotor 106 wird im Betrieb durch den Wind in eine Drehbewegung versetzt und treibt dadurch einen (nicht dargestellten) Generator in der Gondel 104 an.

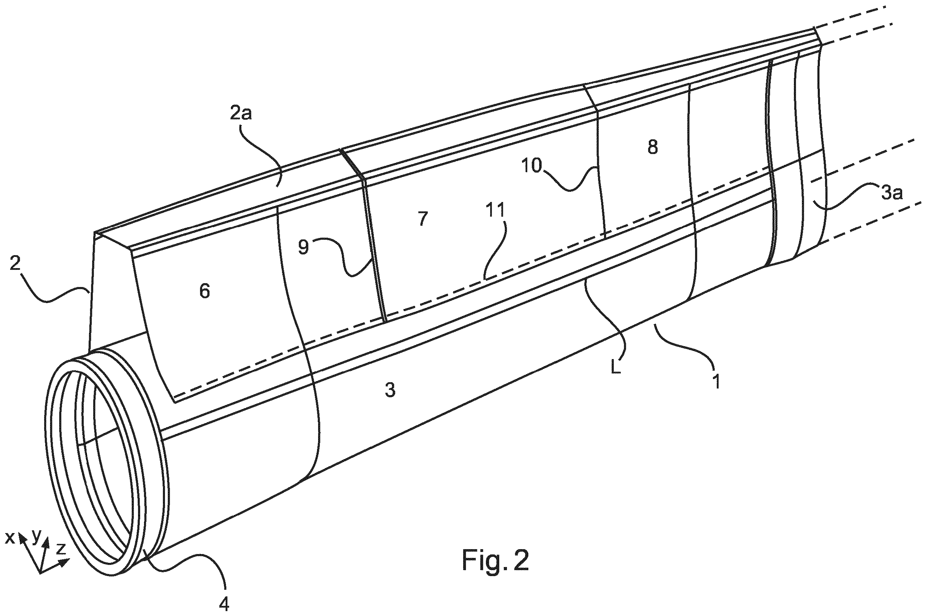

Fig. 2 zeigt einen Ausschnitt eines Windenergieanlagen-Rotorblatts 1, das eine Längsachse L, einen Innenblattabschnitt 3, ein Hinterkantensegment 2 und eine Blattwurzel 4 aufweist. Im Bereich der Blattwurzel 4 weist das Rotorblatt 1 die größte Profiltiefe auf. Eine Blatttrennstelle bzw. ein Blattrennflansch 3a ist dabei an einem Innenblattabschnitt 3 vorgesehen. An der Blatttrennstelle bzw. -flansch kann ein weiterer Blattabschnitt vorgesehen sein und das aerodynamische Profil des Rotorblatts 1 abbilden. Das Hinterkantensegment 2 kann optional ein abgeflachtes Ende 2a aufweisen.

Das Hinterkantensegment 2 kann optional in vier Einzelsegmente 6, 7, 8 als Ausführungsbeispiele von Hinterkantensegmentabschnitten unterteilt sein. Die Einzelsegmente 6, 7 und 8 sind benachbart zueinander angeordnet und nicht miteinander verbunden.

Ein solches Rotorblatt 1 hat dabei den Vorteil, dass ein Teil des Hinterkantensegments 2 wie das Einzelsegment bereits in der Fertigungsanlage an dem Innenblattabschnitt 3 befestigt werden kann während die weiteren Einzelsegmente 6, 7 und 8 erst am Aufstellungsort montiert werden können. Der logistische Aufwand wird beim Transport gegenüber einem komplett montierten Rotorblatt reduziert, so dass z.B. Bahntransporte möglich sind.

Alternativ zu der Ausführungsform in Fig. 2 kann das Hinterkantensegment 2 auch einteilig oder aus zwei oder mehr Einzelsegmenten ausgeführt sein.

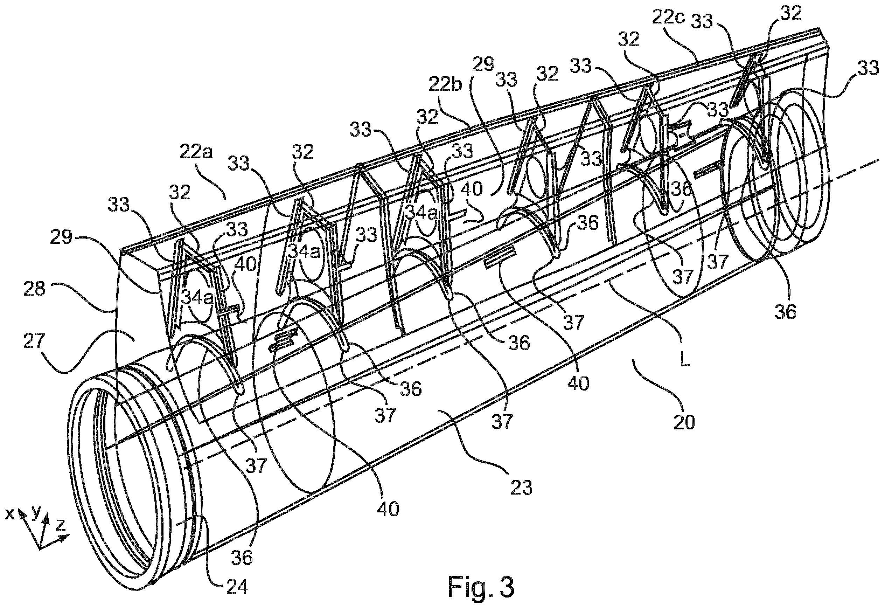

Fig. 3 zeigt einen Ausschnitt eines erfindungsgemäßen Rotorblatts 20, das einen Teil bzw. Abschnitt eines Hinterkantensegments 22 und einen Innenblattabschnitt 23 aufweist. Das Hinterkantensegment 22 weist mehrere Hinterkantensegmentabschnitte 22a - 22c auf. Der Innenblattabschnitt 23 erstreckt sich dabei von der Rotorblattwurzel 24 in Richtung der Längsachse L des Rotorblatts 20. In Fig. 3 weist der Innenblattabschnitt 23 einen ringförmigen oder elliptischen Querschnitt auf. Bei einer Ausgestaltung des Innenabschnitts 23 aus einem Faserverbundwerkstoff, insbesondere einem Glasfasergelege, wird ein solcher ringförmiger oder elliptischer Querschnitt vorzugsweise mittels eines rotierenden Kerns hergestellt, um welchem herum Glasfasergelege gewickelt werden, um Qualitätsschwankungen in dem Innenblattabschnitt zu vermeiden und die Produktionszeit zu verkürzen. Der Innenblattabschnitt 23 kann einen Wickelblattkörper darstellen.

Die Hinterkantensegmentsabschnitte 22a - 22c weisen eine Oberseite (Druckseite) 29 und eine Unterseite (Saugseite) 28 auf, die einen Aufnahmeraum 27 bilden. In dem Aufnahmeraum 27 sind sechs Versteifungsrippen 32 angeordnet. Dabei können die Versteifungsrippen 32 senkrecht zur Längsachse L des Rotorblatts 20 vorgesehen sein und beabstandet zueinander angeordnet sein. Die Versteifungsrippen 32 sind jeweils mit ihren Längskanten 33 über ein Klebemittel von innen an der Oberseite 29 bzw. Unterseite 28 des Hinterkantensegmentabschnitts 22 befestigt und dazu ausgeführt, den Hinterkantensegmentsabschnitt 22 zu versteifen und mit dem Innenblattabschnitt 23 zu verbinden. Die Versteifungsrippen 32 sind dabei so ausgeführt, dass sie kaum Belastungen aus dem Innenblattabschnitt 23 auf den Hinterkantensegmentsabschnitt 22 übertragen. Um Material einzusparen, können die Versteifungsrippen 32 jeweils zwei Ausnehmungen an den Stellen aufweisen, an denen das Material andernfalls nicht vollständig ausgenutzt werden würde. Optional können die Versteifungsrippen 32 eine Ausnehmung 34a aufweisen.

An der dem Innenblattabschnitt 23 zugewandten Querkante 36 sind die Versteifungsrippen 32 jeweils an die Geometrie des Innenblattabschnitts 23 angepasst. In Fig. 3 sind die Querkanten 36 demnach ellipsensegmentförmig oder halbkreisförmig ausgeführt. Vorzugsweise sind die Querkanten 36 mittels eine Klebemittels an dem Innenblattabschnitt 23 befestigt.

An dem Innenblattabschnitt 23 können jeweils korrespondierend zu den sechs Versteifungsrippen 32 sechs U-förmige Verbindungsrippen 37 (in Fig. 3 nicht dargestellt) angeordnet sein. Die Verbindungsrippen 37 sind jeweils in Richtung der Längsachse L beabstandet und parallel zueinander angeordnet. Sie sind planparallel zu den Versteifungsrippen 32 vorgesehen. Bei der Ausführung des Innenblattabschnitts 23 als ein Faserverbundbauteil werden die Verbindungsrippen 37 bei dem Wickelprozess, also dem Herstellungsprozess mit eingewickelt. Es entsteht somit kein zusätzlicher Arbeitsschritt für die Anbringung der Verbindungsrippen. Alternativ werden die Verbindungsrippen nachträglich auf den Wickelkörper, also den Innenblattabschnitt aufgeklebt.

Optional können pro Hinterkantensegmentabschnitt 22a-22c zwei Fliehkraftstützen 40 an dem Innenblattabschnitt 23 befestigt oder verklebt sein.

Die Ober- oder Unterseite 29, 28 der Hinterkantensegmentabschnitte 22a-22c können auf den Fliehkraftstützen 40 aufliegen.

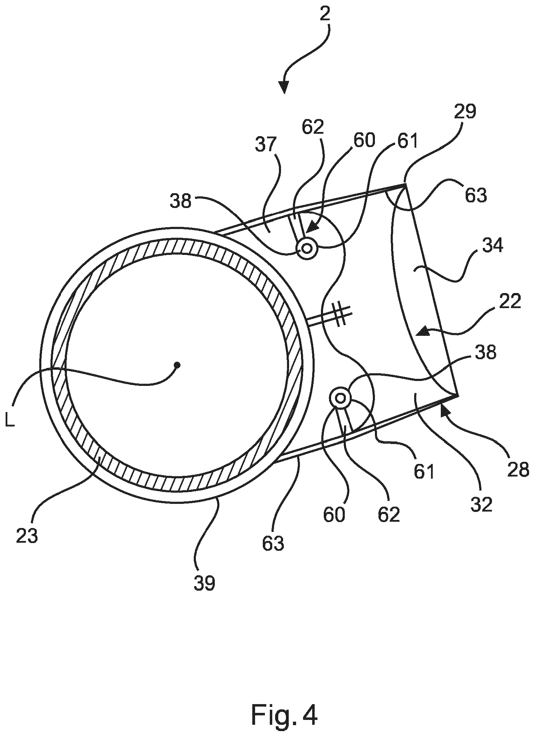

Fig. 4 zeigt eine Vorderansicht eines Ausschnitts eines Rotorblatts 20 mit einem Hinterkantensegmentsabschnitt 22 und einem Innenblattabschnitt 23 in Richtung der Längsachse L des Rotorblatts 20 gemäß einem zweiten Ausführungsbeispiel der Erfindung. Der Innenblattabschnitt 23 ist dabei ringförmig ausgeführt. Der Hinterkantensegmentsabschnitt 22 weist eine Oberseite 29 und eine Unterseite 28 auf, an denen jeweils eine Längskante einer Versteifungsrippe 32 befestigt ist. Der Innenblattabschnitt 23 weist eine U-förmige Verbindungsrippe 37 auf, die über zwei Verbindungssysteme 60 die Verbindungsrippe 37 mit der Versteifungsrippe 32 verbindet. Die Verbindungssysteme 60 weisen dabei jeweils ein Schraube 61 sowie einen Querbolzen 62 auf. Die Schraube 61 wird dabei mit dem Querbolzen 62 verschraubt und stellt somit eine Verbindung des Hinterkantensegments 22 mit dem Innenblattabschnitt 23 her.

Zusätzlich ist um den ringförmigen Innenblattabschnitt 23 ein elektrisch leitendes Band 39 angeordnet, das an ein Blitzschutzsystem der Windenergieanlage angeschlossen ist. Das elektrisch leitende Band 39 dient dabei zusätzlich als Anbindungssicherung, dadurch dass es mit der Verbindungsrippe 37 verspannt wird.

Die Verbindungsrippen 37 weisen jeweils zwei Löcher 38 auf, über die das Hinterkantensegment 22 mit dem Innenblattabschnitt 23 durch ein Verbindungselement verbunden werden kann. Insbesondere ist das Verbindungselement dabei als Schraube und/oder Querbolzen ausgeführt. Zusätzlich zu dem Verbindungselement können die Verbindungsrippen 37 und die Versteifungsrippen 32 an ihren Kontaktflächen miteinander verklebt werden. Dadurch wird der Halt der Verbindung sowie die Lasteinleitung in das Hinterkantensegment verbessert.

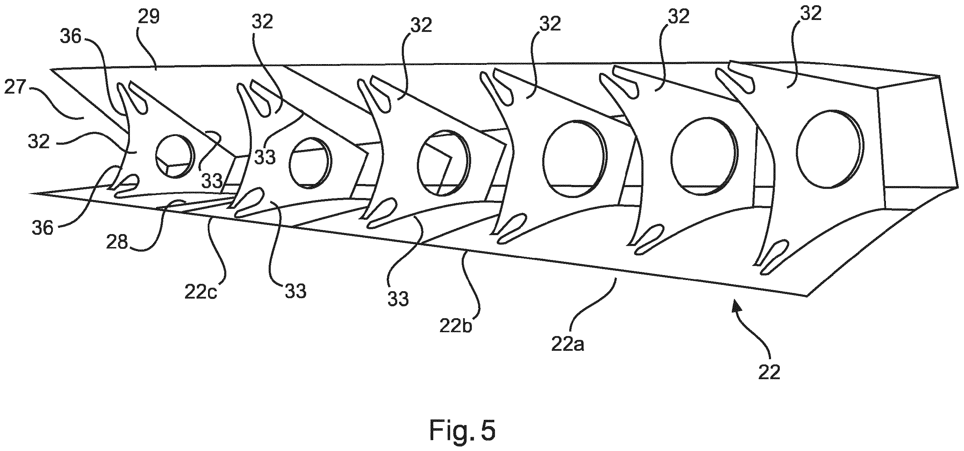

Fig. 5 zeigt ein erfindungsgemäßes Ausführungsbeispiel eines Abschnitts eines Hinterkantensegments 22. Der Hinterkantensegmentsabschnitt 22 weist dabei eine Oberseite (Saugseite) 29 und eine Unterseite (Druckseite) 28 auf, die einen Aufnahmeraum 27 bilden. In dem Aufnahmeraum 27 sind sechs Versteifungsrippen 32 angeordnet, die zur Versteifung des Hinterkantensegmentsabschnitts 22 vorgesehen sind. Zudem sind die Versteifungsrippen 32 derart ausgeführt, dass sie eine Verbindung mit einem korrespondierenden Innenblattabschnitt ermöglichen. In den Versteifungsrippen 32 ist jeweils eine Ausnehmung 34 vorgesehen. Die Ausnehmungen sind dabei derart vorgesehen, dass die Versteifungsrippe 32, die von dem Innenblattabschnitt übertragenden Lasten aufnehmen kann bei gleichzeitiger Minimierung des Materialverbrauchs, und Minimierung der Schärspannungen, die in den Klebefugen in Folge äußerer Belastungen auftreten können.

Die Versteifungsrippen 32 weisen jeweils eine Querkante 36 auf, die an die Geometrie des Innenblattabschnitts angepasst ist. In Fig. 5 ist zu erkennen, dass die Querkante 36 in Form eines Halbkreises ausgeführt ist. Entsprechend ist der korrespondierende Innenblattabschnitt kreisförmig ausgeführt. Die Längskanten 33 der Versteifungsrippen 32 sind mit der Oberseite 29 bzw. Unterseite 28 des Hinterkantensegmentsabschnitts 22 verklebt.

Vorzugsweise werden zwei der sechs Versteifungsrippen 32 pro Hinterkantensegment zur Anbindung an den Innenblattabschnitt verwendet.

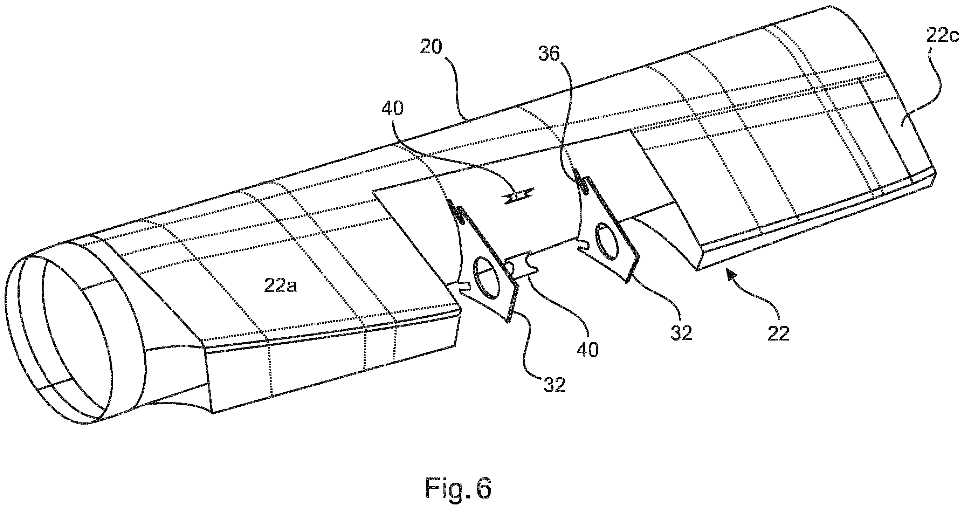

Fig. 6 zeigt eine schematische Darstellung eines Ausschnitts eines Rotorblatts gemäß der Erfindung. Das Rotorblatt weist einen Innenblattabschnitt 23 sowie mehrere Hinterkantensegmentabschnitte 22a, 22c auf, welche zusammen ein Hinterkantensegment 22 darstellen. In Fig. 6 ist der mittlere Hinterkantensegment-abschnitt 22b nicht dargestellt, so dass die Versteifungsrippen 32 und die Fliehkraftstützen 40 zu sehen sind.

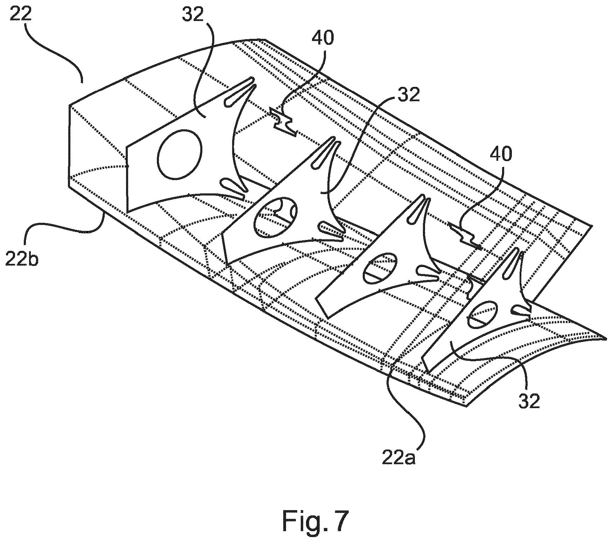

Fig. 7 zeigt eine schematische Darstellung eines Hinterkantensegmentabschnittes gemäß der Erfindung. In Fig. 7 sind insbesondere die Versteifungsrippen 32 und die Fliehkraftstützen 40 innerhalb der Hinterkantensegmentabschnitte 22a, 22b (verdeckt) dargestellt.

Gemäß der Erfindung wird ein Windenergieanlagen-Rotorblatt mit einem Innenblattabschnitt 23 und einem Hinterkantensegment 22 zur Vergrößerung einer Profiltiefe des Rotorblattes vorgesehen. Das Hinterkantensegment kann aus mehreren Hinterkantensegmentabschnitten 22a - 22c bestehen. Die Hinterkantensegment-Abschnitte 22a - 22c sind jeweils über erste und zweite Befestigungsabschnitte punktuell an dem Innenblattabschnitt 23 befestigt. Der erste Befestigungsabschnitt kann durch eine Versteifungsrippe 32, welche innerhalb des Hinterkantensegmentabschnittes 22a - 22c vorgesehen ist, sowie durch eine Verbindungsrippe 37, welche an dem Innenblattabschnitt 23 vorgesehen ist, ausgestaltet sein. Der zweite Befestigungsabschnitt kann ebenfalls durch eine Versteifungsrippe 32 in einem der Hinterkantensegmentabschnitte 22a - 22c und eine Verbindungsrippe 37 an dem Innenblattabschnitt ausgestaltet sein.

Durch die lediglich punktuelle Verbindung (beispielsweise 2 Verbindungspunkte für jeden Hinterkantensegmentabschnitt) kann eine nahezu vollständige Lastentkopplung zwischen dem Innenblattabschnitt und den Hinterkantensegmentabschnitten erreicht werden.

## Patentansprüche

1. Windenergieanlagen-Rotorblatt, mit:
- einer Rotorblattwurzel (24) zum Anschluss des Rotorblatts (1) an eine Rotornabe (105),
- einem Innenblattabschnitt (23), der sich ausgehend von der Rotorblattwurzel (24) in Richtung einer Längsachse (L) des Rotorblatts (1) erstreckt,
- einem Hinterkantensegment mit mindestens einem Hinterkantensegmentabschnitt (22a - 22c) zur Vergrößerung der Profiltiefe des Rotorblatts (1) im Bereich des Innenblattabschnitts (24),
- mindestens einem ersten und einem zweiten Befestigungsabschnitt (32) zum Befestigen des mindestens einen Hinterkantensegmentabschnitts (22a - 22c) an dem Innenblattabschnitt (23),
wobei der erste Befestigungsabschnitt (32) von dem zweiten Befestigungsabschnitt (32) in Richtung der Längsachse (L) des Rotorblatts (20) in einem vorbestimmten Abstand angeordnet ist, und
wobei der mindestens eine Hinterkantensegmentabschnitt (22a - 22c) des Hinterkantensegments über den mindestens einen ersten und zweiten Befestigungsabschnitt (32) an dem Innenblattabschnitt befestigt ist, **dadurch gekennzeichnet, dass** ber den ersten und den zweiten Befestigungsabschnitt (32) an dem Innenblattabschnitt (23) auftretende Lasten punktuell auf den wenigstens einen Hinterkantensegmentabschnitt (22a - 22c) des Hinterkantensegments (22) übertragen werden,
wobei der mindestens eine Hinterkantensegmentabschnitt (22a - 22c) im ersten und zweiten Befestigungsabschnitt (32) eine erste und eine zweite Versteifungsrippe zur Versteifung des wenigstens einen Hinterkantensegmentabschnitt (22a - 22c) aufweist, und die erste und die zweite Versteifungsrippe zur Anbindung an den Innenblattabschnitt (23) vorbereitet ist und
wobei an dem Innenblattabschnitt (23) im ersten und zweiten Befestigungsabschnitt (32) eine erste und eine zweite Verbindungsrippe (37) angeordnet ist, und die erste und die zweite Verbindungsrippe (37) zur Anbindung an den wenigstens einen Hinterkantensegmentabschnitt (22a - 22c) vorbereitet ist.

2. Windenergieanlagen-Rotorblatt nach Anspruch 1, wobei
der mindestens eine Hinterkantensegmentabschnitt (22a - 22c) eine Oberseite (29) und eine Unterseite (28) aufweist, die einen Aufnahmeraum (27) bilden und in dem Aufnahmeraum (27) der erste und der zweite Befestigungsabschnitt (32) angeordnet ist.

3. Windenergieanlagen-Rotorblatt nach Anspruch 1, wobei
die erste und die zweite Versteifungsrippe (32) jeweils eine Längskante (33) aufweist, die sich im Wesentlichen über die gesamte Profiltiefe des Hinterkantensegment-abschnitts (22a - 22c) erstreckt und/oder innerhalb des Aufnahmeraums (27) an der Oberseite (29) und/oder der Unterseite (28) des Hinterkantensegmentabschnitts (22a - 22c) befestigt ist.

4. Windenergieanlagen-Rotorblatt nach einem der Ansprüche 1 oder 3, wobei
die erste und die zweite Versteifungsrippe (32) eine Querkante (36) aufweist, die an die Geometrie des Innenblattabschnitts (23) angepasst ist.

5. Windenergieanlagen-Rotorblatt nach einem der Ansprüche 1 bis 4, wobei
die erste Versteifungsrippe (32) und die erste Verbindungsrippe (37) sowie die zweite Versteifungsrippe (32) und die zweite Verbindungsrippe (37) über eine stoffschlüssige und/oder formschlüssige Verbindung befestigt sind.

6. Windenergieanlagen-Rotorblatt nach Anspruch 5, wobei
die stoffschlüssige Verbindung eine Klebeverbindung umfasst.

7. Windenergieanlagen-Rotorblatt nach Anspruch 5 oder 6, wobei
die formschlüssige Verbindung eine Nietverbindung, Schraubverbindung, Bolzenverbindung und/oder Schlaufenverbindung umfasst.

8. Windenergieanlagen-Rotorblatt nach einem der Ansprüche 1 bis 7, wobei die erste Versteifungsrippe (32) und die erste Verbindungsrippe (37) sowie die zweite Versteifungsrippe (32) und die zweite Verbindungsrippe (37) planparallel zueinander angeordnet sind.

9. Windenergieanlagen-Rotorblatt nach einem der Ansprüche 1 bis 8, wobei die erste
und die zweite Verbindungsrippe (37) U- und/oder Doppel-T-förmig ausgeführt ist.

10. Windenergieanlagen-Rotorblatt nach einem der Ansprüche 1 bis 9, wobei
in der ersten und zweiten Verbindungsrippe (37) Bohrlöcher (38) zum Verbinden der Verbindungsrippe (37) mit einer Versteifungsrippe (32) vorgesehen sind.

11. Windenergieanlagen-Rotorblatt nach einem der vorstehenden Ansprüche, wobei
der Innenblattabschnitt (23) aus einem Faserverbundwerkstoff hergestellt ist und der Innenblattabschnitt (23) einen ellipsenförmigen oder kreisförmigen Querschnitt aufweist und/oder der Innenblattabschnitt (23) als Wickelkörper ausgeführt ist.

12. Windenergieanlagen-Rotorblatt nach einem der Ansprüche 1 bis 11, wobei
die erste und die zweite Verbindungsrippe (37) in den Innenblattabschnitt (23) eingewickelt sind.

13. Windenergieanlage, mit
mindestens einem Rotorblatt nach einem der Ansprüche 1 bis 12.

14. Verfahren zum Herstellen eines Windenergieanlagen-Rotorblatts nach einem der Ansprüche 1 bis 13, mit den Schritten:
- Bereitstellen wenigstens eines Hinterkantensegmentabschnitts (22a - 22c),
- Bereitstellen des Innenblattabschnitts (23),
- Verbinden des wenigstens einen Hinterkantensegmentabschnitts (22a - 22c) mit dem Innenblattabschnitt (23) über einen ersten und einen zweiten Befestigungsabschnitt (32) in einem in Richtung der Längsachse vorbestimmten Abstand zueinander,
so dass über den ersten und den zweiten Befestigungsabschnitt (32) an dem Innenblattabschnitt (23) auftretende Lasten punktuell auf den wenigstens einen Hinterkantensegmentabschnitt (22a - 22c) übertragen werden,
wobei der mindestens eine Hinterkantensegmentabschnitt (22a -22c) im ersten und zweiten Befestigungsabschnitt (32) eine erste und eine zweite Versteifungsrippe zur Versteifung des wenigstens einen Hinterkantensegmentabschnitt (22a - 22c) aufweist, und die erste und die zweite Versteifungsrippe zur Anbindung an den Innenblattabschnitt (23) vorbereitet ist und
wobei an dem Innenblattabschnitt (23) im ersten und zweiten Befestigungsabschnitt (32) eine erste und eine zweite Verbindungsrippe (37) angeordnet ist, und die erste und die zweite Verbindungsrippe (37) zur Anbindung an den wenigstens einen Hinterkantensegmentabschnitt (22a - 22c) vorbereitet ist.

## Claims

1. A wind turbine rotor blade comprising:
- a rotor blade root (24) for connection of the rotor blade (1) to a rotor hub (105),
- an inner blade portion (23) which extends from the rotor blade root (24) in the direction of a longitudinal axis (L) of the rotor blade,
- a trailing edge segment having at least one trailing edge segment portion (22a-22c) for increasing the profile depth of the rotor blade (1) in the region of the inner blade portion (23), and
- at least a first and a second securing portion (32) for securing the at least one trailing edge segment portion (22a-22c) to the inner blade portion (23),
wherein the first securing portion (32) is arranged at a predetermined spacing from the second securing portion (32) in the direction of the longitudinal axis (L) of the rotor blade (20), and
wherein the at least one trailing edge segment portion (22a-22c) of the trailing edge segment is secured via the at least one first and second securing portion (32) to the inner blade portion,
**characterized in that** loads occurring at the inner blade portion (23) are transmitted in point form by way of the first and second securing portions (32) to the at least one trailing edge segment portion (22a-22c) of the trailing edge segment (22),
wherein the at least one trailing edge segment portion (22a-22c) has in the first and second securing portions (32) a first and a second reinforcing rib for reinforcing the at least one trailing edge segment portion (22a-22c) and the first and second reinforcing ribs are adapted for connection to the inner blade portion (23),
and wherein a first and a second connecting rib (37) is arranged at the inner blade portion (23) in the first and second securing portion (32) and the first and second connecting ribs (37) are adapted for connection to the at least one trailing edge segment portion (22a-22c).

2. A wind turbine rotor blade according to claim 1 wherein
the at least one trailing edge segment portion (22a-22c) has a top side (29) and an underside (28) which form a receiving space (27) and the first and the second securing portions (32) are arranged in the receiving space (27).

3. A wind turbine rotor blade according to claim 1 wherein
the first and second reinforcing ribs (32) each have a longitudinal edge (33) which extends substantially over the entire profile depth of the trailing edge segment portion (22a-22c) and/or are secured within the receiving space (27) at the top side (29) and/or the underside (28) of the trailing edge segment portion (22a-22c).

4. A wind turbine rotor blade according to one of claims 1 or 3 wherein
the first and second reinforcing ribs (32) have a transverse edge (36) adapted to the geometry of the inner blade portion (23).

5. A wind turbine rotor blade according to one of claims 1 to 4 wherein
the first reinforcing rib (32) and the first connecting rib (37) as well as the second reinforcing rib (32) and the second connecting rib (37) are secured by way of a positively locking and/or material-bonded connection.

6. A wind turbine rotor blade according to claim 5 wherein
the material-bonded connection includes an adhesive connection.

7. A wind turbine rotor blade according to claim 5 or claim 6 wherein
the positively locking connection includes a rivet connection, a screw connection, a bolt connection and/or a strap connection.

8. A wind turbine rotor blade according to one of claims 1 to 7 wherein the first reinforcing rib (32) and the first connecting rib (37) as well as the second reinforcing rib (32) and the second connecting rib (37) are arranged in plane-parallel relationship.

9. A wind turbine rotor blade according to one of claims 1 to 8 wherein
the first and second connecting ribs (37) are of a U-shaped and/or double T-shaped configuration.

10. A wind turbine rotor blade according to one of claims 1 to 9 wherein
drill holes (38) are provided in the first and second connecting ribs (37) for connecting the connecting rib (37) to a reinforcing rib (32).

11. A wind turbine rotor blade according to one of the preceding claims wherein
the inner blade portion (23) is made from a fibre composite material and the inner blade portion (23) is of an elliptical or circular cross-section and/or the inner blade portion (23) is in the form of a wound body.

12. A wind turbine rotor blade according to one of claims 1 to 11 wherein
the first and second connecting ribs (37) are wound into the inner blade portion (23).

13. A wind turbine comprising
at least one rotor blade according to one of claims 1 to 12.

14. A method of producing a wind turbine rotor blade according to one of claims 1 to 13 comprising the steps:
- providing at least one trailing edge segment portion (22a-22c),
- providing the inner blade portion (23), and
- connecting the at least one trailing edge segment portion (22a-22c) to the inner blade portion (23) via at least a first and a second securing portion (32) at a predetermined spacing relative to each other in the direction of the longitudinal axis,
so that loads occurring at the inner blade portion are transmitted in point form by way of the first and second securing portions (32) to the at least one trailing edge segment portion (22a - 22c),
wherein the at least one trailing edge segment portion (22a-22c) has in the first and second securing portions (32) a first and a second reinforcing rib for reinforcing the at least one trailing edge segment portion (22a-22c) and the first and second reinforcing ribs are adapted for connection to the inner blade portion (23) and
wherein a first and a second connecting rib (37) is arranged at the inner blade portion (23) in the first and second securing portion (32) and the first and second connecting ribs (37) are adapted for connection to the at least one trailing edge segment portion (22a-22c).

## Revendications

1. Pale de rotor d'éolienne, avec :
- une racine de pale de rotor (24) pour raccorder la pale de rotor (1) à un moyeu de rotor (105),
- une section de pale intérieure (23), qui s'étend depuis la racine de pale de rotor (24) en direction d'un axe longitudinal (L) de la pale de rotor (1),
- un segment de bord de fuite avec au moins une section de segment de bord de fuite (22a - 22c) pour agrandir la profondeur de profil de la pale de rotor (1) dans la zone de la section de pale intérieure (24),
- au moins une première et une deuxième section de fixation (32) pour fixer l'au moins une section de segment de bord de fuite (22a - 22c) sur la section de pale intérieure (23),
dans laquelle la première section de fixation (32) est disposée à une distance prédéfinie de la deuxième section de fixation (32) en direction de l'axe longitudinal (L) de la pale de rotor (20), et
dans laquelle l'au moins une section de segment de bord de fuite (22a - 22c) du segment de bord de fuite est fixée sur la section de pale intérieure par l'intermédiaire de l'au moins une première et deuxième section de fixation (32), **caractérisée en ce que**
des charges apparaissant sur la section de pale intérieure (23) sont transférées ponctuellement sur l'au moins une section de segment de bord de fuite (22a - 22c) du segment de bord de fuite (22) par l'intermédiaire de la première et de la deuxième section de fixation (32),
dans laquelle l'au moins une section de segment de bord de fuite (22a - 22c) présente, dans la première et la deuxième section de fixation (32), une première et une deuxième nervure de renforcement pour renforcer l'au moins une section de segment de bord de duite (22a - 22c), et la première et la deuxième nervure de renforcement sont préparées pour être liées à la section de pale intérieure (23), et
dans laquelle une première et une deuxième nervure de liaison (37) sont disposées sur la section de pale intérieure (23) dans la première et la deuxième section de fixation (32), et la première et la deuxième nervure de liaison (37) sont préparées pour être liées à l'au moins une section de segment de bord de fuite (22a - 22c) .

2. Pale de rotor d'éolienne selon la revendication 1, dans laquelle
l'au moins une section de segment de bord de fuite (22a - 22c) présente un côté supérieur (29) et un côté inférieur (28), qui forment un espace de réception (27), et la première et la deuxième section de fixation (32) sont disposées dans l'espace de réception (27).

3. Pale de rotor d'éolienne selon la revendication 1, dans laquelle
la première et la deuxième nervure de renforcement (32) présentent respectivement une arête longitudinale (33), qui s'étend sensiblement sur la totalité de la profondeur de profil de la section de segment de bord de fuite (22a - 22c) et/ou est fixée à l'intérieur de l'espace de réception (27) sur le côté supérieur (29) et/ou le côté inférieur (28) de la section de segment de bord de fuite (22a - 22c).

4. Pale de rotor d'éolienne selon l'une quelconque des revendications 1 ou 3, dans laquelle
la première et la deuxième nervure de renforcement (32) présentent une arête transversale (36), qui est adaptée à la géométrie de la section de pale intérieure (23) .

5. Pale de rotor d'éolienne selon l'une quelconque des revendications 1 à 4, dans laquelle
la première nervure de renforcement (32) et la première nervure de liaison (37) ainsi que la deuxième nervure de renforcement (32) et la deuxième nervure de liaison (37) sont fixées par l'intermédiaire d'une liaison par liaison de matière et/ou par complémentarité de forme.

6. Pale de rotor d'éolienne selon la revendication 5, dans laquelle
la liaison par liaison de matière comprend une liaison par collage.

7. Pale de rotor d'éolienne selon la revendication 5 ou 6, dans laquelle
la liaison par complémentarité de forme comprend une liaison par rivetage, une liaison par vissage, une liaison par boulonnage et/ou une liaison par boucle.

8. Pale de rotor d'éolienne selon l'une quelconque des revendications 1 à 7, dans laquelle la première nervure de renforcement (32) et la première nervure de liaison (37) ainsi que la deuxième nervure de renforcement (32) et la deuxième nervure de liaison (37) sont disposées de manière plane et parallèle les unes par rapport aux autres.

9. Pale de rotor d'éolienne selon l'une quelconque des revendications 1 à 8, dans laquelle la première nervure de liaison et la deuxième nervure de liaison (37) sont réalisées en forme de U ou en forme de double T.

10. Pale de rotor d'éolienne selon l'une quelconque des revendications 1 à 9, dans laquelle
des trous percés (38) pour relier la nervure de liaison (37) à une nervure de renforcement (32) sont prévus dans la première et la deuxième nervure de liaison (37) .

11. Pale de rotor d'éolienne selon l'une quelconque des revendications précédentes, dans laquelle
la section de pale intérieure (23) est fabriquée à partir d'un matériau composite à base de fibres et la section de pale intérieure (23) présente une section transversale elliptique ou circulaire, et/ou la section de pale intérieure (23) est réalisée comme un corps d'enroulement.

12. Pale de rotor d'éolienne selon l'une quelconque des revendications 1 à 11, dans laquelle
la première et la deuxième nervure de liaison (37) sont enroulées dans la section de pale intérieure (23).

13. Eolienne avec
au moins une pale de rotor selon l'une quelconque des revendications 1 à 12.

14. Procédé de fabrication d'une pale de rotor d'éolienne selon l'une quelconque des revendications 1 à 13, avec les étapes :
- de fourniture d'au moins une section de segment de bord de fuite (22a - 22c),
- de fourniture de la section de pale intérieure (23),
- de liaison de l'au moins une section de segment de bord de fuite (22a - 22c) à la section de pale intérieure (23) par l'intermédiaire d'une première et d'une deuxième section de fixation (32) à une distance l'une par rapport à l'autre prédéfinie en direction de l'axe longitudinal
si bien que des charges apparaissant sur la section de pale intérieure (23) sont ponctuellement transférées sur l'au moins une section de segment de bord de fuite (22a - 22c) par l'intermédiaire de la première et de la deuxième section de fixation (32),
dans lequel l'au moins une section de segment de bord de fuite (22a - 22c) présente dans la première et la deuxième section de fixation (32) une première et une deuxième nervure de renforcement pour renforcer l'au moins une section de segment de bord de fuite (22a - 22c), et la première et la deuxième nervure de renforcement sont préparées pour être liées à la section de pale intérieure (23), et
dans lequel une première et une deuxième nervure de liaison (37) sont disposées sur la section de pale intérieure (23) dans la première et la deuxième section de fixation (32), et la première et la deuxième nervure de liaison (37) sont préparées pour être liées à l'au moins une section de segment de bord de fuite (22a - 22c) .
